(19) Europäisches Patentamt

European Patent Office

Office européen des brevets

(11) **EP 1 050 949 A1**

(12) **EUROPEAN PATENT APPLICATION**
published in accordance with Art. 158(3) EPC

(43) Date of publication:
08.11.2000 Bulletin 2000/45

(51) Int. Cl.$^7$: **H02K 9/06**

(21) Application number: 98900684.6

(86) International application number:
**PCT/JP98/00221**

(22) Date of filing: 21.01.1998

(87) International publication number:
**WO 99/38244 (29.07.1999 Gazette 1999/30)**

(84) Designated Contracting States:
**CH DE FR GB LI**

(71) Applicant: **Hitachi, Ltd.**
**Chiyoda-ku, Tokyo 101 (JP)**

(72) Inventors:
• **KAJIWARA, Kenzou**
**Hitachi-shi, Ibaraki 316 (JP)**
• **NAGAI, Kouki**
**Hitachi-shi, Ibaraki 317 (JP)**
• **FUJIGAKI, Tetsuo**
**Hitachi-shi, Ibaraki 316 (JP)**

• **TAKAHASHI, Miyoshi**
**Hitachi-shi, Ibaraki 316 (JP)**
• **MIKAMI, Hiroyuki**
**Hitachi-shi, Ibaraki 316 (JP)**
• **KUWAHARA, Heikichi**
**Tsuchiura-shi, Ibaraki 300 (JP)**
• **TAKAHASHI, Kenji**
**Abiko-shi, Chiba 270-11 (JP)**

(74) Representative:
**Strehl Schübel-Hopf & Partner**
**Maximilianstrasse 54**
**80538 München (DE)**

(54) **MOTOR**

(57) An electric motor capable of achieving improvement in the cooling efficiency of the electric motor while keeping the electric motor characteristics from being deteriorated. Radial air ducts 9 for communicating axial air ducts 7 and 8 with a gap between the stator core 2 and the rotor core 3, the so-called air gap 10, are arranged in the stator core 2 and the rotor core 3 at their portions corresponding to the range of 40% on the downstream side of the cooling air flowing through the air gap 10. Further, the size of the air gap 10 is set within the range of value satisfying a predetermined relational expression. A wedge 16 with magnetism is inserted in each of slots 15 provided in the stator core 2.

F I G. I

## Description

TECHNICAL FIELD

The present invention relates to an electric motor having its iron core provided with air ducts for conducting cooling air in the axial direction and the radial direction.

BACKGROUND ART

A prior art electric motor had such a ventilating structure as disclosed in Japanese Utility Model Laid-open No. Sho 61-156447. Namely, a plurality of axially continuous axial air ducts were provided between the stator core and the stator frame and in the rotor core. Further, radial air ducts communicating the clearance between the stator core and the rotor core, the so-called air gap, with the axial air ducts were provided in the stator core and the rotor core. Further, a plurality of such air ducts were provided at the portion of the core corresponding to the downstream side of the cooling air flowing through the air gap. By having such a ventilating structure as described above, it was attempted in the prior art electric motor to improve the cooling efficiency at the portion of the core corresponding to the downstream side of the cooling air flowing through the air gap.

The portion reaching the highest temperature within an electric motor is the above-described portion of the core near the air gap. This is because losses of higher harmonics and the like concentratedly occur at the portion of the core near the air gap. Therefore, in order to attain improved cooling efficiency of the electric motor, it becomes essential to cool the portion of the core near the air gap. It is specially important to cool the portion of the core on the downstream side of the cooling air flowing through the air gap where the cooling efficiency of the cooling air is deteriorated.

Under the above-described situation, there were arranged in the prior art electric motor a plurality of radial air ducts around the portion of the core on the downstream side of the cooling air flowing through the air gap as described above so as to conduct the cooling air of relatively low temperature flowing through the axial air ducts in the rotor core into the portion in question, and this seemed highly effective.

However, it has been found that an improvement in the cooling efficiency of the portion of the core on the downstream side of the cooling air flowing through the air gap cannot be attained only by disposing a plurality of radial air ducts around the portion of the core on the downstream side of the cooling air flowing through the air gap. This is because the cooling air flowing through the radial air ducts provided in the rotor core screens the cooling air flowing through the air gap, whereby most of the cooling air is led to the axial air ducts between the stator core and the stator frame by way of the radial air ducts provided in the stator core and, hence, much of the cooling air is prevented from flowing into the downstream side of the air gap.

DISCLOSURE OF INVENTION

A first object of the present invention is to provide an electric motor capable of suppressing occurrence of losses due to higher harmonics and the like concentrating in the portion of the core near the air gap thereby achieving an improved cooling efficiency of the electric motor. A second object is to provide an electric motor capable of achieving an improved cooling efficiency of the electric motor while keeping the characteristics of the electric motor from being deteriorated.

A first electric motor according to the invention comprises a stator core arranged on the inner side of a stator frame and a rotor core arranged on the inner side of the stator core across a gap and has a plurality of axially continuous first air ducts arranged between the stator frame and the stator core, a plurality of axially continuous second air ducts and a third air duct communicating the second air ducts with the gap between the stator core and the rotor core arranged in the rotor core, and has a wedge having magnetism inserted in each of a plurality of slots provided in the stator core.

According to the first electric motor, cooling air flowing through the second air ducts of relatively lower temperature than the cooling air flowing through the gap between the stator core and the rotor core is conducted into the gap between the stator core and the rotor core, whereby heat absorption from the gap between the stator core and the rotor core is effectively performed. Further, by means of the wedge having magnetism, higher harmonic components of the gap magnetic flux are reduced and, hence, temperature rise around the gap between the stator core and the rotor core can be decreased. Thus, improvement in the cooling efficiency of the electric motor can be achieved.

In the first electric motor, it is preferred that a fourth air duct communicating the first air ducts with the gap between the stator core and the rotor core be arranged in the stator core.

Further, in the first electric motor, when the electric motor is operated at a rotational speed exceeding 1200 rpm, it is preferred that the third air ducts be arranged at the portion of the rotor core corresponding to the range of 40% on the downstream side of the cooling air flowing through the gap between the stator core and the rotor core.

The aforesaid "40% on the downstream side of the cooling air flowing through the gap between the stator core and the rotor core" means the ratio, to the total axial length of the gap, of the length of the gap from the downstream end of the cooling air to the upstream side of the cooling air. The gap between the stator core and the rotor core means the space between the stator core and the rotor core extending from one end to the other of the core.

Further, in the first electric motor, when the electric motor is operated at a rotational speed of 1200 rpm or below, it is preferred that the third air ducts be arranged in a plurality of positions in the axial direction of the rotor core at substantially equal intervals.

A second electric motor according to the invention comprises a stator core arranged on the inner side of a stator frame and a rotor core arranged on the inner side of the stator core across a gap and has a plurality of axially continuous first air ducts arranged between the stator frame and the stator core, a plurality of axially continuous second air ducts and a third air duct communicating the second air ducts with the gap between the stator core and the rotor core arranged in the rotor core, a fourth air duct communicating the first air ducts with the gap between the stator core and the rotor core arranged in the stator core, and has the size of the gap between the stator core and the rotor core set so as to satisfy the relational expression,

$$0.015 \leqq g/D_{si} \times P \leqq 0.040,$$

where P is the number of poles of the electric motor, $D_{si}$ is the inner diameter of the stator core, and g is the size of the gap between the stator core and the rotor core.

According to the second electric motor, the wind pressure of the cooling air flowing through the gap between the stator core and the rotor core and that of the cooling air flowing through the third air duct become substantially equal and, hence, the cooling air flowing through the third air duct is branched, at the gap between the stator core and the rotor core, into a cooling air flow through the fourth air duct and a cooling air flow through the gap between the stator core and the rotor core, whereby cooling of the gap between the stator core and the rotor corresponding to the portion of the third air duct downstream of the third air duct is performed. At the same time, since the gap g from the rotor core is set to satisfy the aforementioned relational expression, it is attained to have the maximum torque of the electric motor being 160% or above, the temperature rise within the electric motor being 100 K or below, and the power factor of the electric motor being 78% or above. Namely, improvement in the cooling efficiency of the electric motor can be achieved while the electric motor characteristics are kept from being deteriorated.

In the second electric motor, when the electric motor is operated at a rotational speed exceeding 1200 rpm, it is preferred that the third air duct and the fourth air duct be arranged at the portion of the rotor core and the stator core corresponding to the range of 40% on the downstream side of the cooling air flowing through the gap between the stator core and the rotor core.

The aforesaid "40% on the downstream side of the cooling air flowing through the gap between the stator core and the rotor core" means the ratio, to the total axial length of the gap, of the length of the gap from the downstream end of the cooling air to the upstream side of the cooling air. The gap between the stator core and the rotor core means the space between the stator core and the rotor core extending from one end to the other of the core.

In the second electric motor, when the electric motor is operated at a rotational speed of 1200 rpm or below, it is preferred that the third air duct and the fourth air duct be arranged in a plurality of positions in the axial direction of the rotor core and the stator core at substantially equal intervals.

A third electric motor according to the invention comprises a stator core arranged on the inner side of a stator frame and a rotor core arranged on the inner side of the stator core across a gap and has a cooling fan arranged on the side of one end of the rotatable shaft of the rotor core, an air duct for conducting cooling air in the radial direction in the rotor core, and a wedge having magnetism inserted in each of slots provided in the stator core.

According to the third electric motor, cooling air of relatively lower temperature than the cooling air flowing through the gap between the stator core and the rotor core is conducted into the gap between the stator core and the rotor core, whereby heat absorption from the gap between the stator core and the rotor core is effectively performed. Further, by means of the wedge having magnetism, higher harmonic components of the gap magnetic flux are reduced and, thereby, temperature rise around the gap between the stator core and the rotor core can be decreased. Thus, improvement in the cooling efficiency of the electric motor can be achieved.

Further, it is preferred in the third embodiment that an air duct conducting cooling air in the radial direction be arranged in the stator core.

A fourth electric motor according to the invention comprises a stator core arranged on the inner side of a stator frame and a rotor core arranged on the inner side of the stator core across a gap and has a cooling fan arranged on the side of one end of the rotatable shaft of the rotor core, an air duct for conducting cooling air in the radial direction arranged in the rotor core and the stator core, and has the size of the gap between the stator core and the rotor core set so as to satisfy the relational expression,

$$0.015 \leqq g/D_{si} \times P \leqq 0.040,$$

where P is the number of poles of the electric motor, $D_{si}$ is the inner diameter of the stator core, and g is the size of the gap between the stator core and the rotor core.

According to the fourth electric motor, the wind pressure of the cooling air flowing through the gap between the stator core and the rotor core and that of the cooling air flowing through the air duct for conducting cooling air in the radial direction provided in the rotor core become substantially equal and, hence, the cooling air flowing through the air duct for conducting cooling air in the radial direction provided in the rotor core is branched, at the gap between the stator core and the rotor core, into a cooling air flow through the air duct for conducting cooling air in the radial direction provided in the stator core and a cooling air flow through the gap between the stator core and the rotor core, whereby cooling of the gap between the stator core and the rotor corresponding to the portion of the air duct downstream of the air duct for conducting cooling air in the radial direction provided in the rotor core is performed. At the same time, since the gap g from the rotor core is set to satisfy the aforementioned relational expression, it is attained to have the maximum torque of the electric motor being 160% or above, the temperature rise within the electric motor being 100 K or below, and the power factor of the electric motor being 78% or above. Namely, improvement in the cooling efficiency of the electric motor can be achieved while the electric motor characteristics are kept from being deteriorated.

A fifth electric motor according to the invention comprises a stator core arranged on the inner side of a stator frame and a rotor core arranged on the inner side of the stator core across a gap and has such an end structure that takes in out side air from one end and discharges the air from the other end, an air duct for conducting cooling air in the radial direction arranged in the rotor core, and a wedge having magnetism inserted in each of a plurality of slots provided in the stator core.

According to the fifth electric motor, improvement in the cooling efficiency of the electric motor can be achieved as with the above-described third electric motor.

In the fifth electric motor, it is preferred that an air duct conducting cooling air in the radial direction be arranged in the stator core.

A sixth electric motor of the invention comprises a stator core arranged on the inner side of a stator frame and a rotor core arranged on the inner side of the stator core across a gap and has such an end structure that takes in outside air from one end and discharges the air from the other end, an air duct for conducting cooling air in the radial direction arranged in the rotor core and the stator core, and the size of the gap between the stator core and the rotor core set so as to satisfy the relational expression,

$$0.015 \leqq g/D_{si} \times P \leqq 0.040,$$

where P is the number of poles of the electric motor, $D_{si}$ is the inner diameter of the stator core, and g is the size of the gap between the stator core and the rotor core.

According to the sixth electric motor, improvement in the cooling efficiency of the electric motor can be achieved while the electric motor characteristics are kept from being deteriorated as with the above described fourth electric motor.

A seventh electric motor according to the invention comprises a stator core arranged on the inner side of a stator frame and a rotor core arranged on the inner side of the stator core across a gap and has an air duct for conducting cooling air in the radial direction arranged in the rotor core, a wedge having magnetism inserted in each of a plurality of slots provided in the stator core, and the size in the radial direction of the slot opening set within the range of 0 to 0.8 mm.

Here, the slot opening means the slot space from the inner face of the stator core to the wedge and the size in the radial direction of the slot opening means the length from the inner face of the stator core to the wedge.

According to the seventh electric motor, higher harmonic components of the gap flux can be reduced below that in the above described third electric motor and the temperature rise around the gap between the stator core and the rotor core can also be reduced below that in the third electric motor. Thus, improvement in the cooling efficiency of the electric motor over that in the third embodiment can be achieved.

In the seventh electric motor, it is preferred that an air duct conducting cooling air in the radial direction be arranged in the stator core.

Further, in the seventh electric motor, it is preferred that the size in the radial direction of the slot opening be set within the range of 0 to 0.3 mm.

An eighth electric motor according to the invention is an electric motor which has the motor maximum torque being 160% or above and the motor interior temperature rise being 100 K or below, comprises a stator core arranged on the inner side of a stator frame and a rotor core arranged on the inner side of the stator core across a gap, and has an air duct for conducting cooling air in the radial direction arranged in the rotor core and a wedge having magnetism inserted in each of a plurality of slots provided in the stator core.

According to the eighth electric motor, improvement in the cooling efficiency of the electric motor can be achieved while the motor characteristics are kept from being deteriorated the same as in the above-described third electric motor.

In the eighth electric motor, it is preferred that an air duct conducting cooling air in the radial direction be arranged in the stator core.

A ninth electric motor of the invention is an electric motor which has the motor maximum torque being 160% or above and the motor inside temperature rise being 100 K or below, comprises a stator core arranged on the inner side of a stator frame and a rotor core arranged on the inner side of the stator core across a gap and has an air duct for conducting cooling air in the radial direction arranged in the rotor core and the stator core and the power factor of the electric motor being 78% or above.

According to the ninth electric motor, the wind pressure of the cooling air flowing through the gap between the stator core and the rotor core and that of the cooling air flowing through the air duct for conducting cooling air in the radial direction provided in the rotor core become substantially equal and, hence, the cooling air flowing through the air duct for conducting cooling air in the radial direction provided in the rotor core is branched, at the gap between the stator core and the rotor core, into a cooling air flow through the air duct for conducting cooling air in the radial direction provided in the stator core and a cooling air flow through the gap between the stator core and the rotor core, whereby cooling of the gap between the stator core and the rotor corresponding to the portion of the air duct downstream of the air duct for conducting cooling air in the radial direction provided in the rotor core is performed. At the same time, it is attained to have the maximum torque of the electric motor being 160% or above, the temperature rise within the electric motor being 100 K or below, and the power factor of the electric motor being 78% or above. Namely, improvement in the cooling efficiency of the electric motor can be achieved while the electric motor characteristics are kept from being deteriorated.

A 10th electric motor of the invention comprises a stator core arranged on the inner side of a stator frame and a rotor core arranged on the inner side of the stator core across a gap has a plurality of axially continuous first air ducts arranged between the stator frame and the stator core, a plurality of axially continuous second air ducts and a third air duct communicating the second air ducts with the gap between the stator core and the rotor core arranged in the rotor core, a fourth air duct communicating the first air ducts with the gap between the stator core and the rotor core arranged in the stator core, a wedge having magnetism inserted in each of a plurality of slots provided in the stator core, and the size of the gap between the stator core and the rotor core set so as to satisfy the relational expression,

$$0.015 \leqq g/D_{si} \times P \leqq 0.040,$$

where P is the number of poles of the electric motor, $D_{si}$ is the inner diameter of the stator core, and g is the size of the gap between the stator core and the rotor core.

According to the 10th electric motor, cooling air flowing through the second air ducts of relatively lower temperature than the cooling air flowing through the gap between the stator core and the rotor core is conducted into the gap between the stator core and the rotor core, whereby heat absorption from the gap between the stator core and the rotor core is effectively performed. Further, by means of the wedge having magnetism, higher harmonic components of the gap magnetic flux are reduced and, thereby, temperature rise around the gap between the stator core and the rotor core can be decreased. In addition, the wind pressure of the cooling air flowing through the gap between the stator core and the rotor core and that of the cooling air flowing through the third air duct become substantially equal and, hence, the cooling air flowing through the third air duct is branched, at the gap between the stator core and the rotor core, into a cooling air flow through the fourth air duct and a cooling air flow through the gap between the stator core and the rotor core, whereby cooling of the gap between the stator core and the rotor corresponding to the portion downstream of the third air duct can be performed. At the same time, since the gap g from the rotor core is set so as to satisfy the aforementioned relational expression, it is attained to have the maximum torque of the electric motor being 160% or above, the temperature rise within the electric motor being 100 K or below, and the power factor of the electric motor being 78% or above. Accordingly, losses of higher harmonics and the like concentrating in the portion of the core around the gap between the stator core and the rotor core can be suppressed and improvement in the cooling efficiency of the electric motor can be achieved and improvement in the cooling efficiency of the electric motor can be attained while the electric motor characteristics are kept from being deteriorated.

BRIEF DESCRIPTION OF DRAWINGS

FIG. 1 is a vertical sectional view showing a squirrel-cage induction motor as a first embodiment of the invention.
FIG. 2 is a sectional view as taken along the line II-II of FIG. 1.
FIG. 3 is an enlarged sectional view of the portion III of FIG. 2.
FIG. 4 is an enlarged perspective view of the portion IV of FIG. 1.
FIG. 5 is a vertical sectional view of a squirrel-cage induction motor as a second embodiment of the invention.
FIG. 6 is a graph showing relationship of temperature rise within the electric motor to the relational expression of $g/D_{si} \times P$.
FIG. 7 is a graph showing relationship of maximum torque of the electric motor to the relational expression of $g/D_{si} \times P$.
FIG. 8 is a graph showing relationship of power factor of the electric motor to the relational expression of $g/D_{si} \times P$.
FIG. 9 is a graph showing relationship of the ratio between total loss of the electric motor and the rated output to the relational expression of $g/D_{si} \times P$.
FIG. 10 is a graph showing relationship of electric motor characteristics (efficiency, power factor) and the maximum temperature within the electric motor to the air gap size.

BEST MODE FOR CARRYING OUT THE INVENTION

An embodiment according to the present invention will be described below with reference to the accompanying drawings.

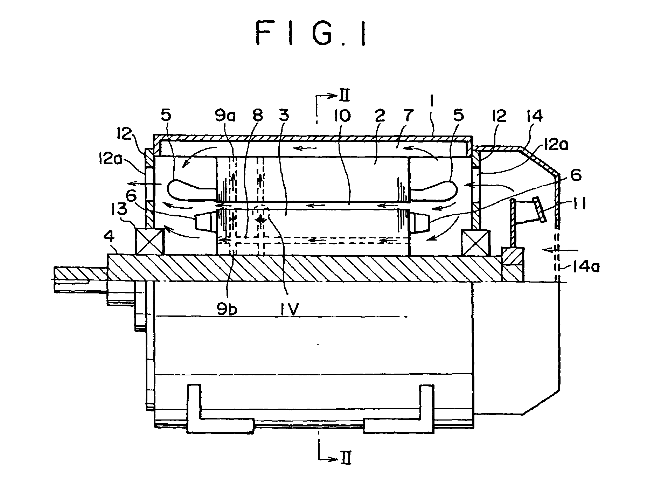

A structure of a squirrel-cage induction motor of a first embodiment of the invention will be described with reference to FIG. 1 to FIG. 4. Reference numeral 1 denotes a stator frame in a cylindrical form. On the inner circumferential side of the same, there is disposed a stator core 2 in a cylindrical form. On the inner circumferential side of the stator core 2, there is disposed a rotor core 3 across a clearance, the so-called air gap 10. Reference numeral 4 denotes a rotor shaft with the rotor core 3 fitted over its periphery.

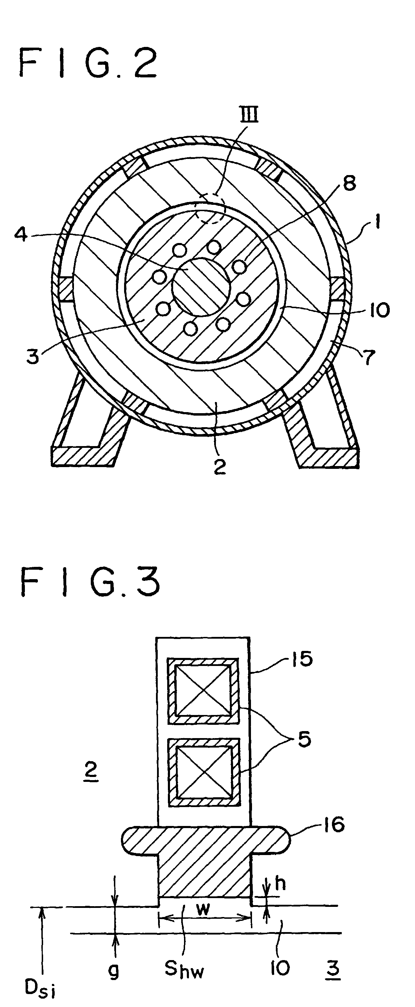

In the stator core 2, there are a plurality of axially continuous slots 15 at predetermined intervals in the circumferential direction. Each of the plurality of slots 15 contains stator windings 5. Further, each of the plurality of the slots 15 is provided with a T-shaped wedge 16 inserted therein as shown in FIG. 3 so that the stator winding 5 will not come off. As the wedge 16 is used a wedge having magnetism of 10 to 50 μH/m in permeability, as stated for example in the Report of the Symposium on Magnetics MAG-85-160 of The Society of Electrical Engineers of Japan (published in 1985), pp. 33 to 39.

Now, when the opening of the slot 15 is denoted by w, the distance from the inner face of the stator core 2 to the wedge 16 by h, and the sectional area of the slot 15, given by the product of the opening W of the slot 15 and the distance from the inner face of the stator core 2 to the wedge 16, by $S_{hw}$, then, the distance h from the inner face of the stator core 2 to the wedge 16 is set within the range of 0 to 0.8 mm, or preferably 0 to 0.3 mm, and the sectional area $S_{hw}$ of the opening of the slot 15 is made small. This is for the purpose of reducing the occurrence of higher harmonic components of the gap magnetic flux by means of the wedge having magnetism 16 inserted in the slot 15.

More specifically, the higher harmonic components of the gap magnetic flux become remarkable on account of the pulsating components of the gap permeance occurring dependently on the opening W of the slot 15. When the higher harmonic components of the gap magnetic flux become remarkable, losses of higher harmonics concentrate in the vicinity of the air gap 10 by the skin effect of the magnetic flux so that the temperature around the air gap 10 becomes higher and the temperature within the electric motor rises. Therefore, the wedge 16 having magnetism is inserted in the slot 15 to reduce the higher harmonic components of the gap magnetic flux.

However, unless the distance h from the inner face of the stator core 2 to the wedge 16 is made small, much effect cannot be obtained. Further, if it is not made small, the slot leakage magnetic flux increases and the electric motor characteristics deteriorate. Therefore, in this embodiment, the distance h from the inner face of the stator core 2 to the wedge 16 is set within the range of 0 to 0.8 mm, or preferably 0 to 0.3 mm.

The rotor core 3 is provided with a plurality of axially continuous slots 18 distributed at predetermined intervals in the circumferential direction. Each of the plurality of slots 18 contains the rotor windings 6.

Between the stator frame 1 and the stator core 2, there are a plurality of axially continuous axial air ducts 7 distributed at predetermined intervals in the circumferential direction. In the stator core 2, there are a plurality of radial air ducts 9a communicating the plurality of axial air ducts 7 with the air gap 10 distributed at predetermined intervals in the circumferential direction. Further, the same are disposed in two positions of the rotor core corresponding to the range of 40% on the downstream side of the cooling air flowing through the air gap 10.

In the rotor core 3, there are a plurality of axially continuous axial air ducts 8 distributed at predetermined intervals in the circumferential direction. Further, the rotor core 3 is provided with a plurality of radial air ducts 9b communicating the plurality of axial air ducts 8 with the air gap 10 distributed at predetermined intervals in the circumferential direction. Further, the same are disposed in two positions of the rotor core corresponding to the range of 40% on the downstream side of the cooling air flowing through the air gap 10. In addition, the radial air ducts 9a and the radial air ducts 9b are arranged to counter each other.

The aforesaid "40% on the downstream side of the cooling air flowing through the air gap 10" means the ratio, to the total axial length of the air gap 10, of the length of the air gap 10 from the downstream end of the cooling air to the upstream side of the cooling air.

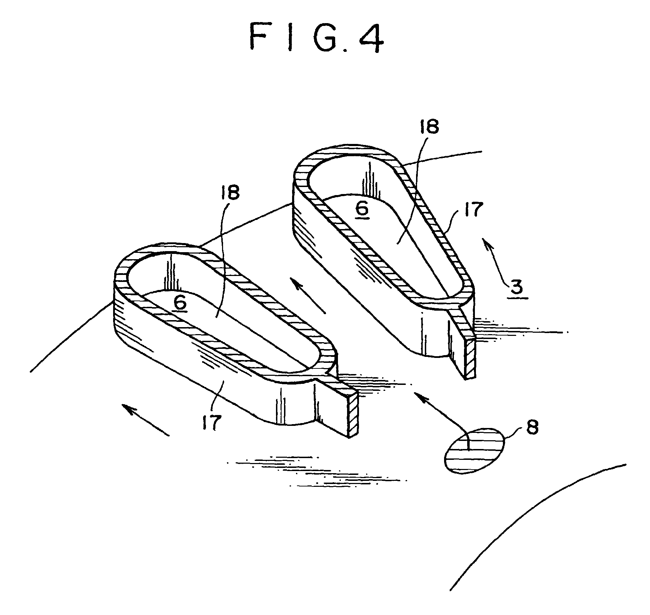

Each of a plurality of the radial air ducts 9b provided in the rotor core 3 is formed, as shown in FIG. 4, by disposing a ring-shaped inter-duct spacer 17 substantially of the same shape as the slot 16 between the slots 16 dividing the rotor core 3 into a plurality of segments in the axial direction. The rotor winding 6 passes through the interior of the same.

Further, in the present embodiment, in order to achieve improved cooling efficiency of the cooling air flowing through the air gap 10 while keeping the characteristics of the electric motor from being deteriorated, the size of the air gap 10 is set to satisfy the below mentioned relational expression:

$$0.015 \leqq g/D_{si} \times P \leqq 0.040, \qquad \text{(Eq. 1)}$$

where g represents the size of the air gap 10, $D_{si}$ the inner diameter of the stator core 2, and P the number of poles of the electric motor.

More specifically, when the distance h from the inner face of the stator core 2 to the wedge 16 is set at 0 to 0.8 mm, or preferably 0 to 0.3 mm, it is required to change the size g of the air gap 10 accordingly so as not to extremely lessen the effect of the wedge 16 having magnetism inserted in the slot 15 and, in addition, not to cause an increase in the slot leakage magnetic flux to deteriorate the characteristics of the electric motor. Otherwise, the ventilating capacity of the air gap 10 is decreased and the airflow and air pressure of the cooling air flowing through the air gap 10 becomes smaller than that of the cooling air flowing through the radial air duct 9b so that the cooling air flowing through the air gap 10 is screened by the cooling air flowing through the radial air duct 9b. As a result, the cooling air is hardly allowed to flow through the downstream side of the air gap 10 and the cooling effect of the air gap 10 on the downstream side is deteriorated.

It may therefore seem better to increase the size g of the air gap 10, but only increasing the size invites an increase in the exciting ampere-turns to deteriorate the electric motor characteristics. For this reason, in the present embodiment, the size g of the air gap 10 is set to satisfy Eq. 1 so that improvement in the cooling efficiency of the cooling air flowing through the air gap 10 is achieved while the characteristics of the electric motor are kept from being deteriorated.

At both ends of the stator frame 1, there are provided doughnut-shaped brackets 12 with a vent hole 12a to cover the stator frame 1 from both sides. On the inner periphery of the brackets 12, there are provided bearing units 13 to bear the rotor shaft 4 for rotation. At one end of the rotor shaft 4, there is provided a cooling fan 11. The end portion of the electric motor where the cooling fan 11 is provided is covered with a fan cover 14 having an air intake 14 made therein.

Now, the flow of the cooling air within the squirrel-cage induction motor of the present embodiment will be described with reference to FIG. 1. The arrows in FIG. 1 indicate the flow of the cooling air.

When the cooling fan 11 is rotated by rotation of the rotor shaft 4, outside air as cooling air is taken in through the air intake 14a of the fan cover 14 and sent into the electric motor through the vent hole 12a in the bracket 12. The cooling air sent into the electric motor is divided into three portions, i.e., the axial air duct 7, the axial air duct 8, and the air gap 10, to cool the stator core 2 and the rotor core 3.

The cooling air flowing through the axial air ducts 8 cools the interior of the rotor core 3 and is divided into axial direction and the radial direction at the intersection with the radial air duct 9b. The cooling air in the axial direction flows downstream through the axial air ducts 8 to cool the interior of the rotor core 3 in the meantime and flows into the interior of the electric motor. On the other hand, the radial cooling air flows through the radial air duct 9b to cool the interior of the rotor core 3 in the meantime and flows into the air gap 10. The cooling air flowed into the air gap 10 meets the cooling air coming from the upstream side of the air gap 10 cooling the portion it passes by in the meantime.

At this time, since the wind pressure of the cooling air flowing through the radial air duct 9b and that of the cooling air flowing through the air gap 10 are substantially equal, the cooling air flowing through the air gap 10 is not screened by the cooling air flowing through the radial air duct 9b. Further, the cooling air flowing through the radial air duct 9b can receive a fan effect by means of the radial air ducts 9b and the interduct spacers 17 rotating with the rotation of the rotor core 3.

The cooling air streams joined at the downstream side of the air gap 10 are parted into the axial direction and the radial direction at the portion where they met. The cooling air in the axial direction cools the vicinity of the air gap 10 while it flows downstream through the air gap 10 and flows into the interior of the electric motor.

At this time, since the cooling air flowing through the axial air duct 8 of a relatively lower temperature than the cooling air flowing through the air gap 10 can be led to the downstream side of the air gap 10 being relatively higher in temperature, heat absorption from the higher temperature portion of the air gap 10 can be effectively performed and, hence, improvement in the cooling efficiency at the downstream side of the air gap 10 can be achieved.

On the other hand, the cooling air in the radial direction cools the interior of the stator core 2 while it flows through the radial air duct 9a and flows into the axial air duct 7. The cooling air flowed into the axial air duct 7 joins the cooling air flowed from the upstream side of the axial air duct 7 cooling the outer periphery of the stator core 2 in the meantime. The joined cooling air streams flow downstream through the axial air ducts 7, cooling the outer periphery of the stator core 2 in the meantime, and flow into the interior of the electric motor. The cooling air flowed into the interior of the electric motor by way of the axial air ducts 7, the axial air ducts 8, and the air gap 10, flows out of the electric motor through the vent holes 12a made in the bracket 12.

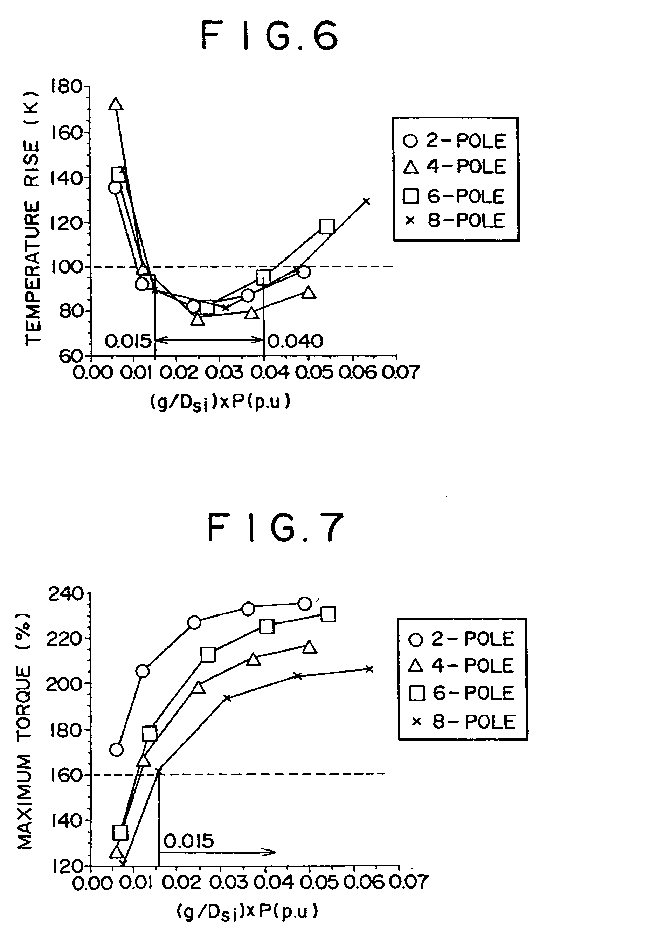

Below will be described the ranges of the values given in Eq. 1 with reference to FIG. 6 to FIG. 9.

The inventors conducted experiments with the aim to obtain the size of the air gap 10 with which improvement in the cooling efficiency of the cooling air flowing through the air gap 10 is achieved while the characteristics of the electric motor are kept from being deteriorated. First, the inventors experimentally obtained relationships, to the relational expression in Eq. 1, of the temperature rise, the maximum torque, the power factor of the electric motor, and the ratio between the total loss and the rated output of the electric motor, and, then, checked the characteristics obtained through the experiments with the specified values and the like which are to be met by the electric motor. Thus, the range of the values given in Eq. 1 satisfying all the specified values and the like were obtained.

FIG. 6 to FIG. 9 are those collectively show relationships, to the relational expression in Eq. 1, of the temperature rise, the maximum torque, the power factor of the electric motor, and the ratio between the total loss and the rated output of the electric motor that were obtained through experiments. In the graphs, the value of the relational expression in Eq. 1 is taken along the axis of abscissas and each of the characteristic values is taken along the axis of ordinates. Incidentally, characteristics of 2-pole, 4-pole, 6-pole, and 8-pole electric motors are shown in the characteristic curves of FIG. 6 to FIG. 9.

FIG. 6 is a characteristic showing relationship of the temperature rise within the electric motor to the relational expression in Eq. 1. According to standards such as JEC 37 (Standards Approved by Standard Investigation Committee of The Society of Electrical Engineers of Japan, "Induction Motor"), the temperature rise within the electric motor must be 100K or below. Hence, the inventors checked FIG. 6 with the specified values. As a result, it was found that the specified value of the temperature rise can be satisfied in all of the 2-pole, 4-pole, 6-pole, and 8-pole electric motors when the range of the values in the relational expression in Eq. 1 is set within 0.015 to 0.040.

FIG. 7 is a characteristic showing relationships of the maximum torque of the electric motor to the relational expression in Eq. 1. According to standards such as JEC 37, the maximum torque of the electric motor must be 160% or above. Hence, the inventors checked FIG. 7 with the specified values. As a result, it was found that the specified value of the maximum torque can be satisfied in all of the 2-pole, 4-pole, 6-pole, and 8-pole electric motors when the range of the values in the relational expression in Eq. 1 is set at 0.015 or above and that the specified value of the temperature rise within the electric motor can also be satisfied.

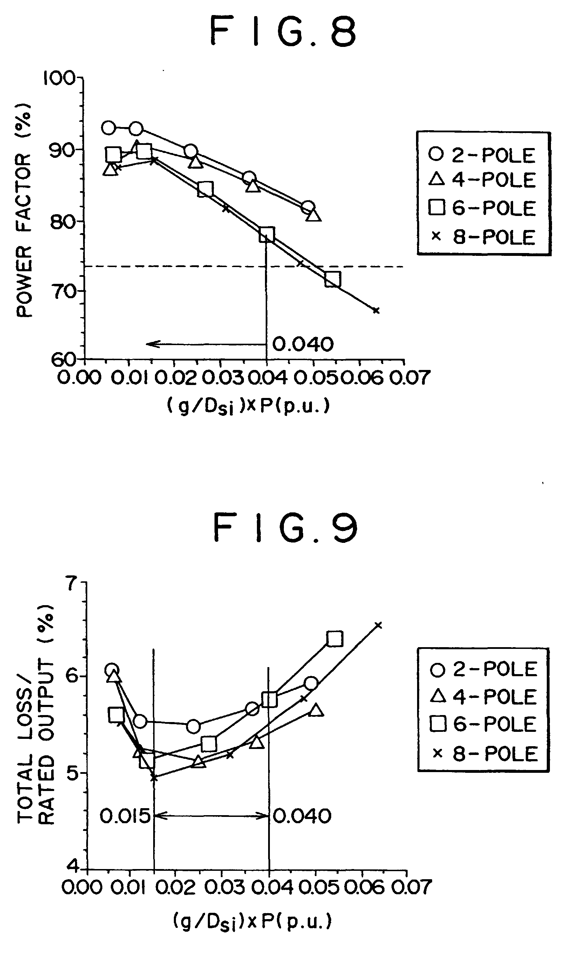

FIG. 8 is a characteristic showing relationships of the power factor of the electric motor to the relational expression in Eq. 1. The power factor of the electric motor, though it depends on the number of poles and the output of the electric motor, must be at least 73.5% or above according to JEM 1381 (Standard Approved by Japan Society of Electric Industry "Characteristics and Noise Level of High-pressure (3 KV Class) Three-phase Squirrel-cage Induction Motor (for General Use, F Class)), and the like. Hence, the inventors checked FIG. 8 with the specified values. As a result, it was found that the specified value of the power factor can be satisfied in all of the 2-pole, 4-pole, 6-pole, and 8-pole electric motors when the range of the values in the relational expression in Eq. 1 is set at 0.040 or below and that the specified values of the temperature rise within the electric motor can also be satisfied. Incidentally, when the value is set at 0.040 or below, a power factor of 78% or above was obtained.

FIG. 9 is a characteristic showing relationships, to the relational expression in Eq. 1, of the ratio of the total loss of the electric motor to the rated output of the same. It is preferred that the total loss of the electric motor be made smaller in terms of energy saving. Therefore, it is preferred that the ratio of the total loss of the electric motor to the rated output be made smaller. Hence, the inventors checked FIG. 9 with the above mentioned range of values satisfying the specified values of the temperature rise, the maximum torque, and the power factor of the electric motor, i.e., with 0.015 to 0.040. As a result, it was found that the aforesaid requirements can be fully met if the range of values is within 0.015 to 0.040.

Thus, the inventors found that improvement in the cooling efficiency of the cooling air flowing through the air gap 10 can be achieved while the characteristics of the electric motor are kept from being deteriorated by setting the range of values in the relational expression in Eq. 1 within 0.015 to 0.040 and setting the size of the air gap 10 so as to satisfy the range of values. Although examples of characteristics of only 2-pole, 4-pole, 6-pole, and 8-pole electric motors were mentioned in the characteristics of FIG. 6 to FIG. 9, the above range of values is also applicable to motors with other number of poles.

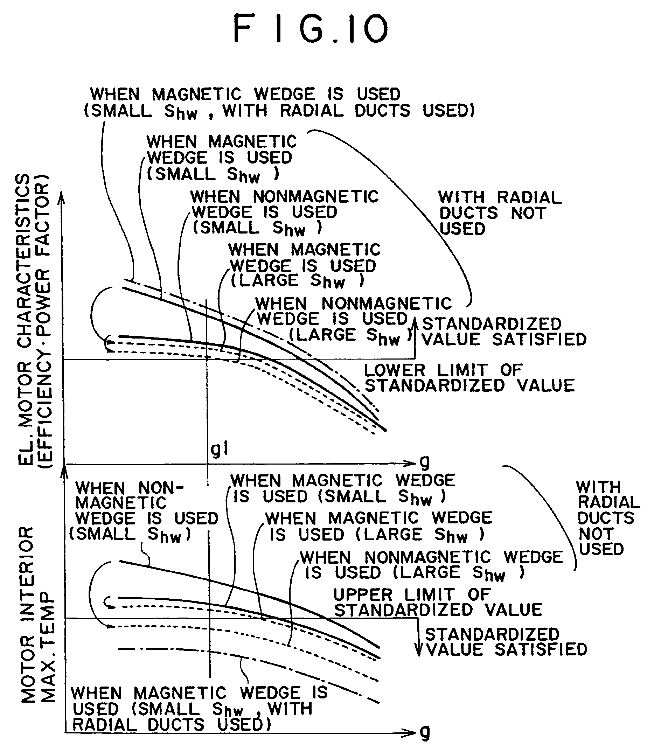

Results of comparison between the squirrel-cage induction motor of the present embodiment and squirrel-cage induction motors having different structures from that of the embodiment will be described below with reference to FIG. 10.

The inventors, in order to compare the squirrel-cage induction motor of the embodiment with squirrel-cage induction motors with other structures, measured electric motor characteristics (efficiency, power factor) and the maximum temperature within the electric motor with respect to the size g of the air gap under the electric motor conditions outputting 120% of the rated output using, as parameters, the sectional area $S_{hw}$ of the slot opening of the stator core, the material of the wedge inserted in the slot of the stator core, and presence or absence of the radial air ducts (air ducts in the radial direction). As a result, characteristics as shown in FIG. 10 were obtained.

Characteristics for a given air gap size g1 were compared. A first electric motor without radial air ducts, with a small slot-opening sectional area $S_{hw}$, and with a wedge having magnetism provided therein exhibited improved motor characteristics over, and produced lower maximum temperature within the electric motor than, a second electric motor without radial air ducts, with a small slot-opening sectional area $S_{hw}$, and with a nonmagnetic wedge provided therein. However, both the electric motors produced the maximum temperatures in the electric motor exceeding the specified value.

A third electric motor without radial air ducts, with a large slot-opening sectional area $S_{hw}$, and with a wedge having magnetism provided therein exhibited electric motor characteristics satisfying the specified values but being lower than those of the second electric motor. This is because the leakage flux is extremely increased due to the enlarged slot-opening sectional area $S_{hw}$. Though it produced the maximum temperature within the electric motor lower than that in the first electric motor, it was greater than that in a fourth electric motor, without the radial air ducts, with a large slot-opening sectional area $S_{hw}$, and with a nonmagnetic wedge provided therein, and exceeded the specified value. This is because, the electric motor characteristics, in the case of the fourth electric motor, vary only slightly when the size of the slot-opening sectional area $S_{hw}$ is changed, but the electric motor characteristics, in the case of the third electric motor, greatly vary when the size of the slot-opening sectional area $S_{hw}$, is changed.

On the other hand, in the case of the squirrel-cage induction motor of the present embodiment, namely a squirrel-cage induction motor with radial air ducts, with a small slot-opening sectional area $S_{hw}$, and with a wedge having magnetism provided therein, the electric motor characteristics and the maximum temperature within the electric motor satisfy the specified values and, in addition, the electric motor characteristics are improved over those of the first electric motor and the maximum temperature within the electric motor is reduced from that in the fourth electric motor.

Therefore, in the squirrel-cage induction motor of the present embodiment, improvement in the cooling efficiency of the electric motor can be achieved while the electric motor characteristics are prevented from being deteriorated and improvement in electric motor characteristics and the cooling efficiency over those of any of the above-described electric motors can be attained.

According to the first embodiment described above, since a wedge having magnetism 16 is inserted in the slot 15 provided in the stator core 2, the higher harmonic components of the gap magnetic flux can be decreased so that temperature rise around the air gap 10 can be reduced and the cooling efficiency around the air gap 10 can be improved. Further, since the distance h from the inner face of the stator core 2 to the wedge 16 is set within the range of 0 to 0.8 mm, or preferably 0 to 0.3 mm, and the sectional area $S_{hw}$ of the opening of the slot 15 is made small, the aforesaid effect can further be improved.

According to the first embodiment, since the size of the air gap 10 is set so that the relational expression of Eq. 1 is satisfied, the wind pressure of the cooling air flowing through the radial air duct 9b and that of the cooling air flowing through the air gap 10 become substantially equal and, hence, the cooling air flowing through the air gap 10 is not screened by the cooling air flowing through the radial air duct 9b so that improvement in the cooling efficiency on the downstream side of the air gap 10 can be achieved. In addition, improvement of the cooling efficiency can be achieved without inviting any increase in the ampere-turns to deteriorate the electric motor characteristics. Incidentally, 160% or above of the maximum torque, 100K or below of the temperature rise within the electric motor, and 78% or above of power factor are attained.

Now, a structure of a squirrel-cage induction motor of another embodiment according to the present invention will be described.

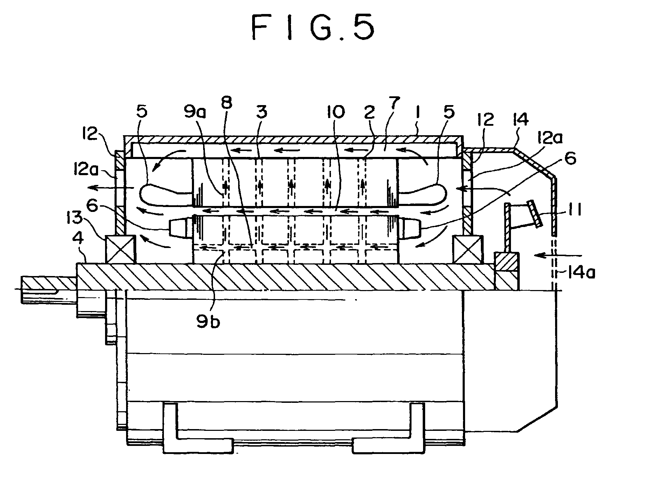

Structure of the second embodiment of the invention will be described with reference to FIG. 5. The squirrel-cage induction motor of this embodiment, the same as the squirrel-cage induction motor of the preceding embodiment, has a wedge having magnetism 16 inserted in the slot 15, has the distance h from the inner face of the stator core 2 to the wedge 16 set at 0 to 0.8 mm, or preferably 0 to 0.3 mm, and has the size of the air gap 10 set so as to satisfy the relational expression of Eq. 1. However, since it is operated at a rotational speed of 1200 rpm or below, it has radial air ducts 9a and radial air ducts 9b provided in a plurality of positions of the stator core 2 and the rotor core 3 at substantially equal intervals.

When the electric motor is operated at a rotating speed exceeding 1200 rpm, satisfactory results can be obtained by using the above-described configuration. When it is rotated at a rotating speed of 1200 rpm or below, however, the rotational speed of the cooling fan 11 provided at one end of the rotor shaft 4 is lowered with the decrease in the rotating speed and, hence, the wind pressure of the cooling air sent into the electric motor is lowered. Therefore, most of the cooling air sent into the electric motor flows through the axial air ducts 7 and 8 while only small amount of cooling air flows through the air gap 10. Thus, the cooling efficiency of the cooling air flowing through the air gap 10 is lowered.

In consideration of these facts, there are provided in the present embodiment radial air ducts 9a and radial air ducts 9b in the stator core 2 and the rotor core 3 in a plurality of positions thereof at substantially equal intervals. By using such a configuration, a portion of the cooling air flowing through the axial air ducts 8 is supplied to the upstream side of the air gap 10 through the radial air ducts 9b so that the cooling efficiency of the cooling air flowing through the air gap 10 is prevented from being deteriorated.

Since, in addition, a wedge having magnetism 16 is inserted in the slot 15 provided in the stator core 2, the higher harmonic components of the gap flux are reduced so that the temperature rise around the air gap 10 can be reduced and the cooling efficiency around the air gap 10 can be improved. Further, since the distance h from the inner face of the stator core 2 to the wedge 16 is set within the range of 0 to 0.8 mm, or preferably 0 to 0.3 mm, and the sectional area $S_{hw}$ of the opening of the slot 15 is made small, the aforesaid effect can further be enhanced.

Further, since the size of the air gap 10 is set so as to satisfy the relational condition of Eq. 1, the wind pressure of the cooling air flowing through the radial air duct 9b and that of the cooling air flowing through the air gap 10 are made substantially equal and, therefore, the cooling air flowing through the air gap 10 is prevented from being screened by the cooling air flowing through the radial air duct 9b and improvement in the cooling efficiency around the downstream side of the air gap 10 can be achieved. Furthermore, the cooling efficiency can be enhanced without inviting an increase in the ampere-turns to deteriorate the electric motor characteristics. Incidentally, the same as in the preceding embodiment, a maximum torque of 160% or above, a temperature rise within the electric motor of 100K or below, and a power factor of 78% or above can be attained.

INDUSTRIAL APPLICABILITY

According to the electric motor of the present invention, it is made possible to provide an electric motor in which the losses of higher harmonics and the like concentrating in the core portion around the air gap can be suppressed and improvement in the cooling efficiency of the electric motor can be attained. Further, it can be made possible to provide an electric motor in which improvement in the cooling efficiency of the electric motor can be attained while the electric motor characteristics are kept from being deteriorated.

## Claims

1. An electric motor comprising a stator core arranged on the inner side of a stator frame and a rotor core arranged on the inner side of said stator core across a gap and having a plurality of axially continuous first air ducts arranged between said stator frame and said stator core, a plurality of axially continuous second air ducts arranged in said rotor core, and a wedge inserted in each of a plurality of slots provided in said stator core, characterized by having a third air duct communicating said second air ducts with said gap arranged in said rotor core and having said wedge formed of a wedge having magnetism.

2. An electric motor according to claim 1 characterized by having a fourth air duct communicating said first air ducts with said gap arranged in said stator core.

3. An electric motor according to claim 1 or 2, characterized by having said third air duct arranged at the portion of said rotor core corresponding to the range of 40% on the downstream side of the cooling air flowing through said gap.

4. An electric motor according to claim 1 or 2, characterized by having said third air ducts arranged in a plurality of positions in the axial direction of said rotor core at substantially equal intervals.

5. An electric motor according to claim 3, wherein said electric motor is operated at a rotational speed exceeding 1200 rpm.

6. An electric motor according to claim 4, wherein said electric motor is operated at a rotational speed of 1200 rpm or below.

7. An electric motor comprising a stator core arranged on the inner side of a stator frame and a rotor core arranged on the inner side of said stator core across a gap and having a plurality of axially continuous first air ducts arranged between said stator frame and said stator core and a plurality of axially continuous second air ducts arranged in said rotor core, characterized by having a third air duct communicating said second air ducts with said gap arranged in said rotor core, having a fourth air duct communicating said gap with said first air ducts arranged in said stator core, and having the size g of said gap set so as to satisfy the relational expression,

$$0.015 \leqq g/D_{si} \times P \leqq 0.040,$$

where P is the number of poles of the electric motor, $D_{si}$ is the inner diameter of said stator core, and g is the size of said gap.

8. An electric motor according to claim 7, characterized by having said third air duct and said fourth air duct arranged at the portion of said rotor core and said stator core corresponding to the range of 40% on the downstream side of the cooling air flowing through said gap.

9. An electric motor according to claim 7, characterized by having said third air ducts and said fourth air ducts arranged in a plurality of positions in the axial direction of said rotor core and said stator core at substantially equal intervals.

10. An electric motor according to claim 8, wherein said electric motor is operated at a rotational speed exceeding 1200 rpm.

11. An electric motor according to claim 9, wherein said electric motor is operated at a rotational speed of 1200 rpm or below.

12. An electric motor comprising a stator core arranged on the inner side of a stator frame and a rotor core arranged on the inner side of said stator core across a gap and having a cooling fan arranged on the side of one end of the rotatable shaft of said rotor core and a wedge inserted in each of a plurality of slots provided in said stator core, characterized by having an air duct for conducting cooling air in the radial direction in said rotor core and having said wedge formed of a wedge having magnetism.

13. An electric motor comprising a stator core arranged on the inner side of a stator frame and a rotor core arranged on the inner side of said stator core across a gap and having a cooling fan arranged on the side of one end of the rotatable shaft of said rotor core, characterized by having an air duct for conducting cooling air in the radial direction arranged in said rotor core and said stator core and having the size g of said gap set so as to satisfy the relational expression,

$$0.015 \leqq g/D_{si} \times P \leqq 0.040,$$

where P is the number of poles of the electric motor, $D_{si}$ is the inner diameter of said stator core, and g is the size of said gap.

14. An electric motor comprising a stator core arranged on the inner side of a stator frame and a rotor core arranged on the inner side of said stator core across a gap and having such an end structure that takes in outside air from one end and discharges the air from the other end and having a wedge inserted in each of a plurality of slots provided in said stator core, characterized by having an air duct for conducting cooling air in the radial direction arranged in said rotor core and having the wedge formed of a wedge having magnetism.

15. An electric motor comprising a stator core arranged on the inner side of a stator frame and a rotor core arranged on the inner side of said stator core across a gap and having such an end structure that takes in outside air from one end and discharges the air from the other end, characterized by having an air duct for conducting cooling air in the radial direction arranged in said rotor core and said stator core and having the size g of said gap set so as to satisfy the relational expression,

$$0.015 \leqq g/D_{si} \times P \leqq 0.040,$$

where P is the number of poles of the electric motor, $D_{si}$ is the inner diameter of said stator core, and g is the size of said gap.

16. An electric motor comprising a stator core arranged on the inner side of a stator frame and a rotor core arranged on the inner side of said stator core across a gap and having a wedge inserted in each of a plurality of slots provided in said stator core, characterized by having an air duct for conducting cooling air in the radial direction arranged in said rotor core, having said wedge formed of a wedge having magnetism, and having the size in the radial direction of said slot opening set within the range of 0 to 0.8 mm.

17. An electric motor according to claim 16, wherein said size in the radial direction of said slot opening is set within the range of 0 to 0.3 mm.

18. An electric motor comprising a stator core arranged on the inner side of a stator frame and a rotor core arranged on the inner side of said stator core across a gap, having a wedge inserted in each of a plurality of slots provided in said stator core, and having the motor maximum torque being 160% or above and the motor interior temperature rise being 100 K or below, characterized by having an air duct for conducting cooling air in the radial direction arranged in said rotor core and having said wedge formed of a wedge having magnetism.

19. An electric motor comprising a stator core arranged on the inner side of a stator frame and a rotor core arranged on the inner side of said stator core across a gap and having the motor maximum torque being 160% or above and the motor interior maximum temperature rise being 100 K or below, characterized by having an air duct for conducting cooling air in the radial direction arranged in said rotor core and said stator core and having the power factor of said electric motor kept at 78% or above.

20. An electric motor comprising a stator core arranged on the inner side of a stator frame and a rotor core arranged on the inner side of said stator core across a gap and having a plurality of axially continuous first air ducts arranged between said stator frame and said stator core, a plurality of axially continuous second air ducts arranged in said rotor core, and a wedge inserted in each of a plurality of slots provided in said stator core, characterized by having a third air duct communicating said second air ducts with said gap arranged in said rotor core, having a fourth air duct communicating said gap with said first air ducts arranged in said stator core, having said wedge formed of a wedge having magnetism, and having the size g of said gap set so as to satisfy the relational expression,

$$0.015 \leqq g/D_{si} \times P \leqq 0.040,$$

where P is the number of poles of the electric motor, $D_{si}$ is the inner diameter of said stator core, and g is the size of said gap.

# F I G . I

# FIG.2

# FIG.3

# F I G. 4

# F I G . 5

# F I G.6

# F I G.7

# FIG.8

# FIG.9

# F I G.10

WHEN MAGNETIC WEDGE IS USED
(SMALL $S_{hw}$, WITH RADIAL DUCTS USED)

WHEN MAGNETIC
WEDGE IS USED
(SMALL $S_{hw}$)

WHEN NONMAGNETIC
WEDGE IS USED
(SMALL $S_{hw}$)

WHEN MAGNETIC
WEDGE IS USED
(LARGE $S_{hw}$)

WITH RADIAL
DUCTS NOT
USED

WHEN NONMAGNETIC
WEDGE IS USED
(LARGE $S_{hw}$)

STANDARDIZED
VALUE SATISFIED

LOWER LIMIT OF
STANDARDIZED VALUE

EL. MOTOR CHARACTERISTICS
(EFFICIENCY·POWER FACTOR)

$g_l$

$g$

WHEN NON-
MAGNETIC
WEDGE IS USED
(SMALL $S_{hw}$)

WHEN MAGNETIC WEDGE
IS USED (SMALL $S_{hw}$)

WHEN MAGNETIC WEDGE
IS USED (LARGE $S_{hw}$)

WHEN NONMAGNETIC WEDGE
IS USED (LARGE $S_{hw}$)

WITH
RADIAL
DUCTS
NOT
USED

UPPER LIMIT OF
STANDARDIZED VALUE

STANDARDIZED
VALUE SATISFIED

MOTOR INTERIOR
MAX. TEMP

WHEN MAGNETIC WEDGE IS
USED (SMALL $S_{hw}$, WITH
RADIAL DUCTS USED)

$g$

18

## INTERNATIONAL SEARCH REPORT

| International application No. |
|---|
| PCT/JP98/00221 |

**A. CLASSIFICATION OF SUBJECT MATTER**

Int. Cl⁶ H02K9/06

According to International Patent Classification (IPC) or to both national classification and IPC

**B. FIELDS SEARCHED**

Minimum documentation searched (classification system followed by classification symbols)

Int. Cl⁶ H02K9/00-9/28

| Documentation searched other than minimum documentation to the extent that such documents are included in the fields searched | | |
|---|---|---|
| Jitsuyo Shinan Koho | 1940 | - 1997 |
| Kokai Jitsuyo Shinan Koho | 1971 | - 1997 |
| Toroku Jitsuyo Shinan Koho | 1994 | - 1997 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP, 60-181162, U (Mitsubishi Electric Corp.), December 2, 1985 (02. 12. 85), Fig. 2 (Family: none) | 1, 2, 4, 6, 12, 14, 16-19 |
| Y | JP, 60-151245, U (Mitsubishi Electric Corp.), October 8, 1985 (08. 10. 85), Fig. 5 (Family: none) | 1, 2, 4, 6, 12, 14, 16-19 |
| Y | JP, 5-276706, A (Toshiba Corp.), October 22, 1993 (22. 10. 93), Fig. 2 (Family: none) | 1, 2, 4, 6, 12, 14, 16-19 |

| ☐ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| February 4, 1998 (04. 02. 98) | February 17, 1998 (17. 02. 98) |

| Name and mailing address of the ISA/ | Authorized officer |
|---|---|
| Japanese Patent Office | |
| Facsimile No. | Telephone No. |

Form PCT/ISA/210 (second sheet) (July 1992)